# EUROPEAN PATENT SPECIFICATION

(11) **EP 0 494 298 B1**
(45) Date of publication and mention of the grant of the patent: **04.06.1997**
(21) Application number: 91914315.6
(22) Date of filing: 24.07.1991
(51) Int. Cl.: H04B 7/15, G07G 1/14, G08C 17/00

(54) **MULTI-LEVEL RADIO-FREQUENCY COMMUNICATION SYSTEM**
MULTINIVEAURADIOKOMMUNIKATIONSSYSTEM
SYSTEME DE TRANSMISSION HAUTE FREQUENCE A NIVEAUX MULTIPLES

(30) Priority: 25.07.1990 US 558895
(43) Date of publication of application: 15.07.1992
(60) Divisional application: 96116280.7
(73) Proprietor: NORAND CORPORATION, Cedar Rapids, IA 52401 (US)
(72) Inventor: KOENCK, Steven, E., Cedar Rapids, IA 52403 (US); BUNTE, Alan, G., Cedar Rapids, IA 52402 (US); CARGIN, Keith, K., Jr., Cedar Rapids, IA 52402 (US); HANSON, George, E., Cedar Rapids, IA 52405 (US); MAHANY, Ronald, L., Cedar Rapids, IA 52402 (US); MILLER, Phillip, Cedar Rapids, IA 52404 (US); SALVAY, Steven, H., Cedar Rapids, IA 52401 (US)
(74) Representative: Hitchcock, Esmond Antony
(86) International application number: US9105234
(87) International publication number: WO9202084

(56) References cited:
- EP-A- 0 280 543
- WO-A-88/08649
- GB-A- 2 196 766
- US-A- 4 539 706
- US-A- 4 549 264
- US-A- 4 775 928
- Patent Abstracts of Japan, Vol 12, No 152, P725, abstract of JP 63- 27969, publ 1988-02-05

## Description

The invention relates generally to mobile data communications systems and more particularly to data communications systems in which a radio link is established between a central computer or data processing station and a plurality of selectively addressable communications substations.

The prior art has developed to a state in which radio links between a central computer as a central data processing station and a plurality of substations is becoming well established in the art. Portable, hand held data terminals are coupled via RF (Radio Frequency) wireless data links to a transceiver and a multiplexing station and such a central processing station. The hand-held data terminals are used, for example, for restocking merchandise items, thus, in the larger sense for real time inventory control and pricing of merchandise items.

United States Specification No. 4,775,928 describes a system which enables a computer operator to transmit instructions to the computer from a hand-held terminal and also receive messages from the computer, via a wireless link.

In a currently pending patent application by Miller et al. entitled "Transaction Control System Including Portable Data Terminal and Mobile Customer Service Station", U.S. Serial No. 07/345,146, filed April 28, 1989, and assigned to the assignee of the present invention, at least one of the hand held data terminals is replaced by a portable customer service station which may include multiple components which are selectively addressed by the central processing station to print customer information at the portable customer service station, based on data inputs received from one or more of the hand held data terminals in the disclosed transaction system.

Other uses of centrally controlled operations relate to improvements in the delivery or service route business. In operations relating to delivery service, a delivery vehicle may contain a printer module which is mounted within the vehicle and which either may be powered by the vehicle or it may be battery powered and, hence, self-contained. The printer module may have associated therewith a terminal cradle such as is disclosed in a patent application of Phillip Miller et al., filed on January 31, 1989, Serial No. 07/305,302, entitled "Vehicle Data System", assigned to the assignee of the current invention. A hand held data terminal may be inserted into the cradle. The insertion of the terminal communicatively couples the terminal to the printer to enable the terminal to transfer data to the printer. This type of operation allows the route driver to use the hand held data terminal to complete a transaction at a customer's premises, enter a record of the completed transaction into the terminal, and use some of the entered information of the transaction record in a data transfer to the printer module to generate a printed invoice or waybill to present to the customer on the spot for acknowledgment and for the customer's records. The data terminal in such an operation may be of a batch type, in which the data terminal retains all transactional information regarding a plurality of deliveries in self contained memory, until the delivery route has been completed. At this time the collected data may be transferred from the data terminal via a hard-wired data link to a central processing station.

The referred to copending application of Phillip Miller et al. further discloses a vehicle data system which expands the use of the hand held data unit to address a plurality of data devices which may be selectively installed and used in a service vehicle. The system may include at least one hand held data terminal which may be temporarily removed to gather data from outside of the vehicle, in a manner similar to that of the delivery route operation. As a particular example, a forklift truck is disclosed as a vehicle the operation of which is being advantageously affected by the vehicle data system. Through the data system an operator of the forklift vehicle may receive operating instructions on a real time basis. Each of the plurality of data devices may be selectively coupled via a vehicle-resident local area network (LAN) to other data devices as addressed, for example, by a LAN controller. The referred-to copending application further discloses a portable hand held data terminal which may contain programming to act as the LAN controller and may be removably received in a mobile mount adapter of the vehicle LAN. Alternatively, an RF modem may be coupled to the LAN and contain the network controller and further couple the LAN data bus with a stationary host central data processing station. The RF modem would be able to periodically supply data from the hand-held data terminal and from various other LAN-coupled data terminals or measurement devices to the host station. Similarly, the host station may supply data to a data terminal, such as a printer as needed.

The above-described system of the Phillip Miller et al. patent application includes a further enhancement in that any of the described data terminals, such as vehicle operation measuring gauges or the vehicle mounted printer, are selectively coupled to the LAN only when fully functional, and are otherwise not recognized as being present as part of the LAN. Though more flexible than state of the art fixed device installations, the operational flexibility of such a system is limited by the configuration of the LAN installed in the vehicle. Data terminal adapters for a predetermined number of data terminals or peripherals must be configured to allow the system to serve a particular need. Even though vehicle LAN systems for the predetermined number of data devices are known to simplify wiring of the vehicle, the desired flexibility permitted under the disclosed vehicle data system would again increase the complexity of locating data terminal adapters to selectively include various data terminals.

A similar communication system is described in United States Specification No. 4,539,706, in which a mobile transceiver communicates via a first frequency channel with a plurality of hand-held portable units. The mobile transceiver is linked to a fixed base station via a second frequency channel, and is able to repeat signals received on one frequency channel on the other.

It is therefore an object of the invention to provide a portable data system with the ability of being selectively enhanced without a need for pre-installed wiring to support any such selective enhancements.

It is an additional object of the invention to provide for selective placement of data terminals within a functional environment of a LAN controller without the need for a plurality of pre-installed data terminal adapters to receive such data terminals at any selected location relative to the LAN controller.

It is a further object of a particular aspect of the invention to provide versatility to a mobile LAN, such as a vehicle-resident LAN, to enable data terminals to be selectively added and repositioned without requirements for changing the wiring of such mobile LAN.

The invention may also provide a portable, hand-held data terminal which permits scanning, display of data, printing, communication to a remote host computer or central data processing station, and other functions without an increase in size relating to such a diversity of functions.

Furthermore, the invention may provide a means of wirelessly communicating between a portable hand-held data terminal and a plurality of peripheral devices dedicated to such portable hand-held terminal.

The present invention provides a data communication system comprising a local area network adapted to operate on a first wireless communication channel; a communications interface adapted to operate on a second wireless communication channel; and a mobile communication device adapted to operate on the first and second wireless communication channels. A controller is provided to operate on the first wireless communication channel to manage communication on the local area network.

In a preferred arrangement, the communications interface is communicatively linked to a data station. The local area network preferably comprises a plurality of data terminals, each having a transceiver for operating on the first wireless communication channel.

The hierarchical data communications system allows the data terminals to be communicatively coupled to a long range receiver. Advantages are realized in a large area radio frequency communications net, which is operative with a great number of relatively low cost terminals at an outer working perimeter of the system. In that the low cost of a transceiver for each data terminal in conjunction with avoidance of installation costs and maintenance of a fixed wiring system tends to provide a more cost effective and more flexible communication system, cost savings may be realized at he outer working perimeter of the communication system. The second wireless communication channel may operate over a longer transmission range, whilst the first may comply with more rigid transmission specifications.

The data communication device may selectively extract predetermined data from received messages and relay only selected data between a data station and one or more data terminals. The controller may communicate with a plurality of modular data terminals and redirect selected data as data messages between the terminals.

The invention will now be described by way of example and with reference to the accompanying drawings wherein:
Figure 1 is a schematic representation of a multi-order radio frequency communication system;
Figure 2 is a simplified schematic diagram of a communication system according to the invention;
Figure 3 is a block diagram of major components of a communication device including features of the present invention;
Figures 4 and 5 are simplified representations of uses of the communication device shown in Figure 3 and of data terminal devices embodying features of the present invention;
Figure 6 is a flow diagram showing operational steps of a communication device in accordance with the present invention;
Figure 7 is a simplified representation of a data terminal device including features of the present invention;
Figure 8 shows a schematic diagram of a communication system comprising a plurality of LANs;
Figure 9 is a simplified representation of details of a communication device in accordance with the present invention enabling a data terminal device to be temporarily coupled thereto;
Figure 10 is a schematic representation of another communication system;
Figure 11 is a simplified representation of a data entry device for illustrating certain features of the invention; and
Figure 12 is a pictorial representation of a receptacle for the data entry device shown in Figure 11.

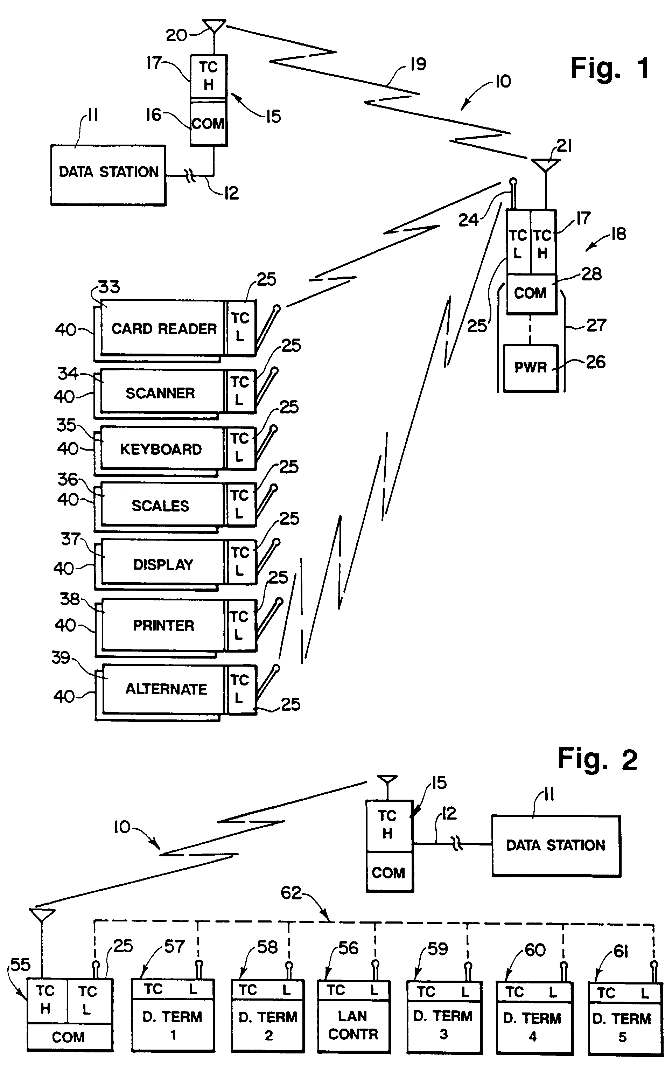

Referring now to Fig. 1, there is shown a multi-order or multi-level mobile data communication system or data system designated generally by the numeral 10. The term "mobile" applies to certain user devices of the data system 10, in that they are either portable in the sense of being self-contained by being internally powered, or by being of a convenient size and adapted to being carried about by an operator without effort, or having both of the above characteristics. For most applications of the data system 10, the term "mobile" does not apply to a data station ("DATA STATION"), also identified by numeral 11. The data station 11 is representative of a central data processing station, typically referred to as a "host", namely a host computer 11. The host computer 11, though certainly capable of being mobile as referred to herein, is typically stationary and would normally be located in a central location. The host computer 11 may be a mainframe computer or one of a new generation of high capacity desk top computers. In any case, the host computer 11 is intended and expected to be of sufficient processing capacity to serve the needs of the data system 10. While the data system 10 as further described herein may communicate with a mainframe such as the host computer 11, the host computer 11 need not be part of the data system 10, as herein further described, for the data system to function in accordance with the invention.

The host computer 11 typically may be coupled via a typical communication link, such as a communication cable or optical fiber data conductor 12 to a communication interface 15. The term "communication" as used herein applies to sending and receiving digital data messages. Communication may take place through such data conductor 12 or via radio frequency transmissions and receptions. When a data message is described as being transmitted from one device to another, an established link is presumed. However, though a message is generally received by all terminals operating on the same frequency, selective addressing precludes processing of a message not addressed to a particular terminal. Therefore, the term "communication" also includes "selective communication".

The above communications interface 15 may be located in proximity of the host computer 11 or may be somewhat remotely located at a convenient site for expedient transmission and reception of data messages. The communications interface 15 preferably consists of a communications multiplexer module 16 and a transceiver 17. The transceiver 17 is, in the described embodiment of the invention, a frequency modulation ("FM") transceiver, capable of operating on a frequency band allocated by the Federal Communications Commission to industrial FM transmissions. (Alternatively, a spread spectrum transceiver may be used.) The transceiver 17 is referred herein as having a high power transmitter and corresponding receiver module. Typical "ranges" over which such a transceiver can effectively transmit may be to five thousand feet or even longer. Transmission standards established by the Federal Communication Commission are, consequently, strict. Hence, tolerances on components used are narrowly defined. Manufacturing costs and quality assurance procedures are moderately high to meet or exceed the required transmission standard. The term "high power" is used as a relative term to identify and distinguish one type of data transmission operation with respect to another type of transceiver module of a data communication device 18.

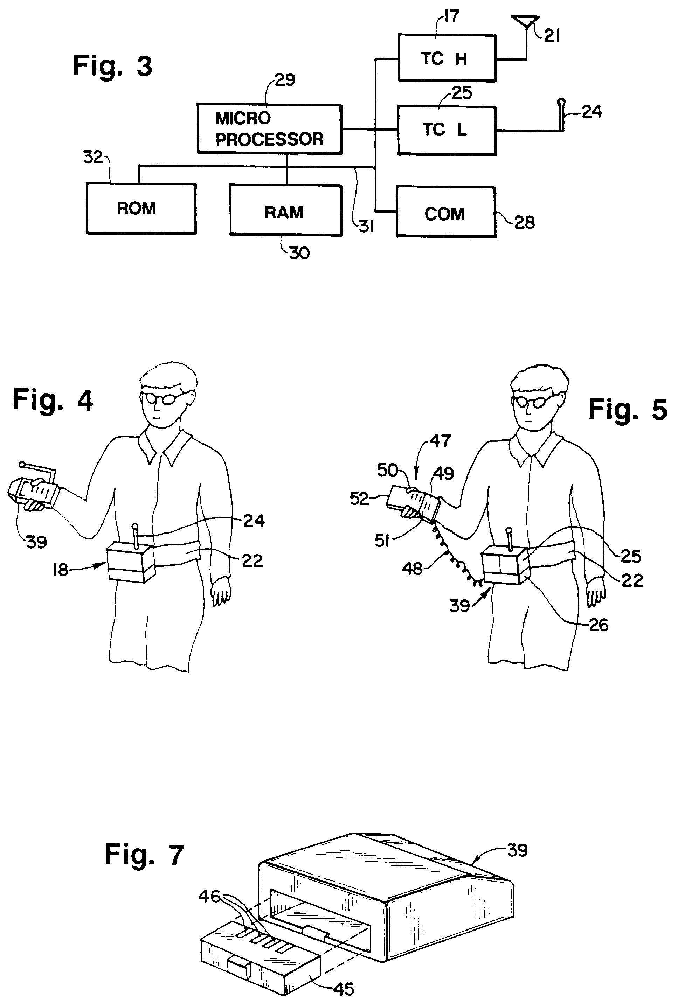

The communication device 18 also includes a transceiver 17 having the high power transmitter module. Consequently, the transceiver 17 of the communications interface 15 is capable of communicating along a communication link 19 between antennae 20 and 21 of the communications interface 15 and the communication device 18, respectively. The communication link 19 represents the high power transmission link. The respective transmission module, the transceiver 17, require a relatively substantial amount of power considering battery operation. The communication device 18, as herein described, is generally "portable" or "mobile". A self-contained power source is, hence, of sufficient weight to warrant the communication device 18 to have provisions for being carried on a belt 22, when the device is to be carried about by a person as, for example, in FIG. 4. The communication device 18 may also be vehicle-mounted, such as in a route delivery truck or on a forklift truck for use in warehouse operations. When mounted in a truck or on a forklift the communication device 18 may conveniently be powered by resident vehicle power.

It should be noted that the antennae 20 and 21 are represented schematically by typical triangular antennae symbols in distinction to a symbolic representation of another antenna 24 of the communication device 18, shown as a stick with a rounded end. The antenna 24 represents the antenna of what is referred to herein as a "low power" transceiver 25, a transceiver unit functional with first type radio frequency transmissions, preferably low power type transmissions in comparison to that of the transceiver 17. The transceiver unit 17 could then be characterized as having second type radio frequency transmissions or comparatively high power transmissions. As will become apparent from the following description of the respective functions and modes of operation of the transceivers 17 and 25, their respective communications should desirably not overlap. The transceivers 17 would consequently operate using a communications channel different from that of the transceivers 25. Different channels imply different frequencies or modulation methods. Nevertheless, a single antenna may be used for both the high power and low power transceivers 17 and 25, such that the antennae 21 and 24 are shown as being different primarily to distinguish the high power and low power transceivers 17 and 25 from each other.

In contrast to the high power transceiver 17, the transmission range of the low power transceiver 25 is short. The typical low power transmission range may be between ten and fifty feet, and the maximum range of transmission may be limited for example to no more than few hundred feet. For such lower power transmitting devices, communication standards are more relaxed. Consequently, the transceiver 25 can be manufactured for much lower cost. The economics of the multi-level communications system are based on cost advantages which substitute the transceiver 25 for typical wiring. A greater number of devices operating at the first or lowest level of the hierarchical communication system can amount to significant cost avoidance with a corresponding increase in flexibility within the system 10.

The communication device 18 is described herein as a mobile or portable device. FIG. 1 shows schematically a connectible power source 26, including for example a rechargeable type NiCad battery with desirably supporting circuitry to permit alternate power to be supplied and to control a recharging operation. The power source or battery 26 may be housed separately or be included in a common housing 27 with the communication device 18. The battery may be coupled to the communication device 18 in a typical manner to power both the high and low power transceivers 17 and 25, respectively, as well as a communication module ("COM"), also identified by the numeral 28. The communication module 28 of the communication device 18 preferably includes such data modulation and demodulation circuits as are typically used in converting digital data signals into signals for transmission by either transceivers 17 or 25. The communication module 28 may further include identification and address circuits for implementing a protocol for a Local Area Network ("LAN").

In reference to FIG. 3, there is shown a block diagram of major functional blocks which may be separately identified in describing the operation of the communication device 18. In addition to the high and low power transceivers 17 and 25, and the communication module 28, the communication device 18 is microprocessor controlled, and includes a processor circuit or microprocessor 29 ("MICRO PROCESSOR") of a type having the capability of addressing two separate radio frequency transceivers, such as the transceivers 17 and 25.

Typical state of the art microprocessors have the capability of processing data messages. The term "processing" as used herein includes a sequence of operations, typically controlled by an instructional program. The instructional program may be referred to as a "protocol". Data messages may contain one or more address codes, also instructional codes, and data codes. The microprocessor 29 has the capability of reading and interpreting a received data message. The microprocessor 29 typically responds by identifying an address or instructional code, storing the address or instructional code and the received data codes, storing the memory addresses of stored information, and by acting on instructions to assemble data messages and send such assembled data messages to an assigned device. More specific operations relate to controlling the low power communications in general, and to be available, on command, to receive from and transmit to the high power communication level. To avoid interference between local, low power communication and long range, high power communication, different channels may typically be assigned to low power and high power transmissions. However, to avoid interfering data communication transmissions on the local, low power level, the communication device 18 may disassemble received data messages and readdress portions thereof with another address code for retransmission on the local level to the designated data terminal device. Other portions of a received data message may be assembled into another data message to be transmitted to another data terminal device on the local, low power level. Collectively the operations are referred to as "processing". In the specific environment of the communication device 18 the processing functions may not differ much in number from those of the host computer 11. However, they are dedicated to the specific purpose of relaying information between the low power and the high power data communication levels.

In the architecture of the communication device 18, modifications are possible within the scope of the invention. It may, for example, be desirable to use two separate, concurrently operating microprocessors 29 in substantially parallel operation, each to control the operation of a respective one of the transceivers 17 and 25. The operation of the microprocessor 29 typically includes a random access memory module 30 ("RAM") for temporarily storing address codes, temporary control codes and data extracted from received data messages. The storage capacity of the memory module 30 may vary, depending on the demands made on stored information and the type of operation desired. If information received via the low power transceiver 25 is to be uploaded to the host computer 11 only periodically as a batch transmission, then a greater storage capacity for the memory module 30 is desirable. If, however, data are relayed through the communication device 18 on a real time basis, then a comparatively smaller memory capacity in the memory module 30 may suffice. It may also be desirable to use the data processing power and capacity afforded by the microprocessor 29 and memory 30 to provide data processing within the communication device 18. Data are routed between the described functional circuit modules by a typical data bus 31. Also coupled to the data bus 31, the communication device 18 would further comprise a read only memory 32 ("ROM"). The memory 32 typically contains predetermined or fixed information, such as the operating protocol for receiving and transmitting data messages, extracting address codes from data messages, routines for temporarily storing address codes and data, and various other routines as will become apparent from a description of the operation of the data system 10. In the communication system as described in reference to Fig. 1, the read-only memory 32 would include operating instructions to the microprocessor 29 as protocol for the operation of a LAN. By incorporating the referred to LAN control or master protocol in the memory 32 of the communication device 18, the communication device 18 becomes effectively a LAN controller for a number of data terminals 33 through 39 as shown in Fig.1. Typically, a LAN type operation permits data terminals within the LAN to communicate on an equal level among each other. Accordingly, all transceivers 25 being part of the same LAN would operate on the same radio frequency or channel. Thus, typically a transmission by any of the transceivers 25 may be received by all other transceivers within the LAN. The typical LAN type operation among the data terminals, such as the data terminals 33 through 39 is altered in accordance with a preferred embodiment of the current invention.
Accordingly, the communication device 18 controls communication among the data terminals 33 through 39 by functioning as a communication relay device to selectively, by specifically addressing, re-transmit data messages received from one of the data terminals 33 through 39 to another one thereof. The data message must be re-addressed by the LAN controlling protocol, lest the data message be received by the receiving data terminal device upon its first transmission from the originating data terminal device to the communication device 18. Input and output signals are translated from or to such initial data signals to or from data messages of communication between the respective communication device 18 and a selected and specifically addressed one of the data terminal devices 33 through 39.

The data terminals are particularly identified as specific examples of various data terminal devices which may be coupled to function as a system as herein further described. In general, a data terminal is a data transducer. For example, the identified data terminal devices may be data input devices, data output devices, both or even a combination of a plurality of such devices. Whether they are data input or output devices, the data terminal devices "transduce" data from one form to another. A data output device would receive data from within the system and display the data as an output of a different form. In particular, a card reader 33 ("CARD READER"), a scanner 34 ("SCANNER"), a keyboard 35 ("KEYWARD") and scales 36 ("SCALES") would be typical data input devices, in that data are obtained by such devices from sources external to the system 10, to be "transduced" or translated by the devices into digital binary data signals which can be communicated by electronic transmission within the system. The scanner 34 may read various types of indicia, such as bar codes, characters or text, or capture signatures. Though the above input devices may primarily direct data into the system, address codes may nevertheless be received by the input device. Consequently, whether the primary data stream is in one direction only or in two directions, the process of transferring data either to or from a device is referred to herein as data communication.

The card reader 33 could in a most common example be a magnetic stripe reader for reading magnetically encoded identification data of a bank charge card or credit card and for translating such data into digital signals. The scanner 34 may be a typical laser bar code reader or other label reader for identifying marked codes on merchandise items (not shown), and for also translating such identified codes into digital binary coded data signals. Various models of such laser scanners 34 are known and are commercially available. The keyboard 35 may be an alphanumeric keyboard of standard size for a computer or typewriter, or it may be an alphanumeric keyboard of compressed size, as used with respect to portable, hand held data terminals. The keyboard 35 may, of course, be simply a numeric keyboard including possibly certain function keys, such as addition or other instructional codes. The scales 36 are contemplated to be digital electronic scales, an output of which is communicable by digital signal transmission.

In distinction over the described data input devices, the display 37 and the printer 38 are data output devices. The display 37 may be an LCD display, which may comprise an output screen of several lines for displaying alphanumeric data, or it may be one of several known luminescent data display screens including a typical cathode ray tube. For reasons of portability, an LCD display screen is preferred because of typically lower power requirements with respect to other display screens in the operation of such a device. The printer 38 may be a thermal printer. The described data output devices receive data as binary data messages and translate such messages into typically alphanumeric display character messages, hence into human-readable messages. The printer 38 may also be a bar code printer, translating the messages into machine readable format.

In reference to FIG. 1, the described data input and output devices and the alternate data terminal device 39 ("ALTERNATE") are uniquely characterized in that each includes one of the low power transceivers 25. Each of the data terminal devices 33 through 39 also includes the communication circuit 28 or similar circuitry for modulating and demodulating data messages. Each of the data terminal devices 33 through 39 desirably also includes a microprocessor and stored protocol as well as random access memory, as shown by the microprocessor 29, the read-only memory 32 and the memory 30 in FIG. 3, except that only the single transceiver 25 is present and programmed to be addressed. Each of the data terminal devices 33 through 39 preferably also includes a self-contained power source 40, as indicated by the stacked block representation in FIG. 1.

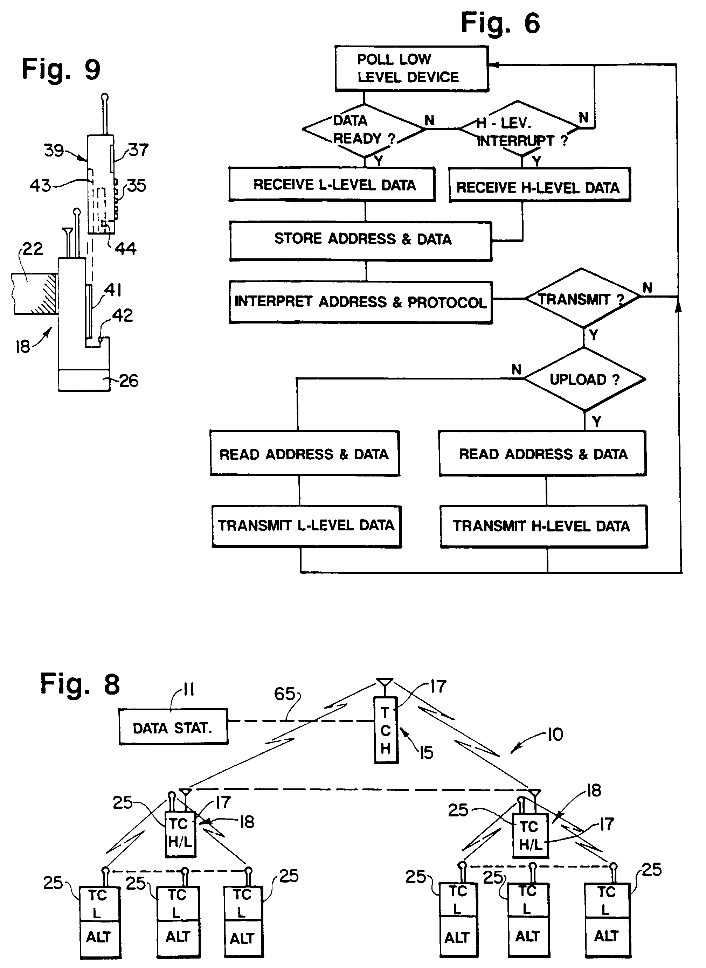

Because of a lower power requirement of the transceiver 25 with respect to the transceiver 17, the power requirement for the transceiver may be small, in comparison to the power requirement of the corresponding data terminal device. Since the power source 40 is adapted to serve the needs of both the data terminal device and the low power transceiver 25, the power source designated 40 may vary in size and storage capacity, depending on the type of device to be served, and will be generally smaller than that of device 18. In a particular embodiment illustrated in FIG. 9, the data terminal device 39 comprises a combination of input and output devices, and in particular the functional keyboard 35 and the functional display 37. Because of the typically low power requirement of both keyboard and display, the major power consuming device is the transceiver 25. A criterion of the hand held data terminal device 39 as configured is an optimally minimal weight. FIG. 9 consequently shows a configuration in which the communication device 18 is belt-carried and comprises a high capacity self-contained power source 26. The communication device 18 is configured to include a guide track 41 and contact elements 42. The data terminal device 39 features a complementary guide track 43 and contact elements 44 complementary to the contact elements 42. The communication device 18 together with the high capacity battery or power source 26 has comparatively much greater weight than the data terminal device 39, as configured as hand held data terminal. Between uses, the operator may temporarily seat the data terminal 39 on the guide track 41 of the communication device 18 which forms a holder for the data terminal. While the data terminal 39 is seated as described, the power source 40, such as a NiCad battery of smaller capacity than the power source 26, may be recharged by the power source 26. The self-contained power source of each such data terminal device 33 through 39 may in some user configurations advantageously be replaced by alternate external power supplied from available line sources. This may be particularly desirable when the data terminal devices 33 through 39 become functional units of a service vehicle, such as a typical route delivery vehicle or a typical warehouse vehicle, such as a forklift truck (not shown). While it may be desired to provide such connectible external power and the respective power wiring, such wiring is nevertheless more simple than the provision of a vehicle installed LAN. Power supplied to each of the data terminal devices is preferably of the same voltage, such that the power connectors are typical and may all be of the same type. This is different with respect to data communication wiring which may need to differ depending on what type of data terminal is to be installed.

With respect to radio frequency data communication, the protocol stored in each respective one of the memories 32 is capable of identifying the respective data terminal device as to its characteristic function when placed "on line." Thus, each of the data terminal devices 33 through 39 have the capability of becoming integrated into the LAN upon becoming functional. The distinction over a LAN is that the typical hard wiring and terminal adapters are eliminated.

An immediate advantage is that products fundamentally dissimilar in a mechanical sense can be added. As another data terminal device 39 with a previously not anticipated mechanical configuration becomes a desirable addition to the previous system, such device may be added via the low power transceiver 25. The transceivers 25 become "connectors" for coupling any such additional devices into the system. The LAN, as described herein within the scope of this invention could therefore be referred to as a "virtual" LAN. Though an immediate distinction, the elimination of the wiring, however, may not be the most significant advantage of the wireless LAN. Instead, a major advantage is seen in an increased flexibility to adapt the presence of functional units or data terminal devices to serve a particular need with essentially no other effort or cost than that of the added device. Product innovations can be made in which the new products need not be bound by physical compatibility constraints. The referred to flexibility extends to both additions and deletions of functional units such as the data terminal devices 33 through 39. Any one of the devices may be deleted from or moved within the data system 10 and assigned to another user location. The described functional exchange further includes the ability to exchange any defective data terminal device 33 through 39 for a functional equivalent. If it is desirable for several of the described LAN systems to coexist in proximity different operating channels may be chosen. For each LAN it may be desirable to provide each of the data terminal devices 33 through 39 with a removable cartridge 45 which may contain the memory 32 with data identifying the data terminal device with a particular LAN, as shown in FIG. 7 with respect to the data terminal device 39 ("ALTERNATE"). The cartridge 45 may also contain a dedicated communication circuit or program to assign or configure a predetermined communication channel to establish the desired communication link between the respective device 33 through 39 and the corresponding communication device 18. Electrical contact elements 46 which may be disposed on the cartridge will be urged into contact with complementary electrical elements (not shown) located within the respective data terminal device.

The data terminal device 39 may be any of a number of devices including, or other than, the data terminal devices 33 through 38 already described in detail. As an example of a data terminal device 39 other than those already described, reference is made to a mobile vending system. In a mobile vending system, such as a delivery vehicle for delivering pizza or ice cream or any other route delivery operation, the driver may be likely to handle significant amounts of cash. In such an operation a truck-mounted cash drawer may be desirable. The alternate data terminal device 39 may consequently represent a cash drawer. The alternate data terminal may also be a transducer of data relating to the operation of the vehicle itself, for example, providing data records on the number of miles driven or on fuel consumption. As another example, the alternate data terminal device 39 may be a portable data entry terminal which may be used by door-to-door vending or polling operations. Data are entered by such a portable data entry terminal and are immediately transmitted to the communication device 18. The communication device 18 itself may be belt-carried by an operator, as shown in FIG. 4, or it may otherwise be mounted in a vehicle parked in proximity. In the latter example, the data terminal device 39 may include the already described circuit functions of keyboard and a display device. The device 39 would nevertheless be considered within the LAN as a single data terminal device. As a data terminal featuring a keyboard and display, the device does include both data input and output functions and would be recognized as such by the respective communication device 18.

A particular advantage of the data terminal device 39 over state of the art terminals is that data storage and other functions may be minimized by removal from the hand-held device to a self-contained data terminal device of the LAN. Extensive portable computing power or customer information storage devices may, for example, be carried in another data terminal device 39 on the belt of the operator. The data terminal device 39 may use the data storage capacity and processing power afforded by the communication device 18, or communicate via the communication device 18 with the host computer 11. Thus, FIG. 4 showing the communication device 18 carried on the belt of the operator could also show a data terminal device 39 carried by the operator in a similar manner. FIG. 5 shows an alternate embodiment in which a data terminal device 39 is belt-supported and carried by an operator. The data terminal device includes a separate, hand held data entry module 47 which is coupled to the data terminal device 39 by an electric cord 48. The data entry module 47 depicted in FIG. 5 includes a keyboard 49, a printer 50, a display screen 51 and a laser scanner 52. The power source 26 for the hand held elements of the data entry module 47 is preferably located with the transceiver 25 on the belt of the operator. Other supporting circuitry, to the extent possible, such as memory modules, and any other elements which are not needed in the hand held module 47 itself, are also contained in the device 39 as carried by the operator's belt. An advantage is a minimal weight without loss of functions with respect to state of the art data terminals. State of the art terminals which include such elements as a keyboard and display as well as a printer and laser scanner traditionally have had substantial hand-supported weight and size.

Referring to FIG. 2, there is shown a data system of the kind described in substance with respect to Fig. 1, which has been modified in accordance with the present invention. In particular, the communication device 18 shown in FIG. 1 has been modified in that the referred to LAN control protocol has been removed to result in the communication device designated by the numeral 55 in FIG. 2. The communication device 55, except for not having the capability of functioning as a LAN controller, includes all of the functional elements of the communication device 18, as described in reference to FIG. 3. Thus, in order for the LAN to function, one of the data terminal devices, identified by the numeral 56, becomes a LAN controller. The LAN controller 56 includes as a component of the data system 10 the described functional elements typical of a data terminal device, namely the transceiver 25, the communication module 28, the microprocessor 29, the memory 30 and the read-only memory 32, functionally coupled as in FIG. 3, except for the high power transceiver 17 and its support functions. The use of the separate LAN controller 56 results in an advantage which frees the communication device 55 from continuous contact with other data terminals of a particular LAN, such as identified generally by "D. TERM. 1" through "D. TERM 5", also identified by numerals 57 through 61, respectively in FIG. 2. The LAN controller 56 in accordance with the described hierarchical operation would exercise the function of polling the addresses of possible data terminals 57 through 61. In a first alternate embodiment, the LAN controller may also poll the low power transceiver 25 of the communication device 55. The LAN controller's function of polling the LAN device is a deviation from the preferred hierarchical communication, in that the communication device 55 is the link or interface to the next higher level communication. As such the communication device 55 may be preferred to control its own operation, as described in the following alternate embodiment.

A second alternate embodiment of operation places the communication device 55 on a second level of the data or communication system 10. Accordingly, the LAN controller polls only the data terminal devices 57 through 61 in low power radio frequency communication. The LAN controller receives data messages in response to such polling operation, and relays the data in accordance with received addresses of data messages and stores those of the received data that are to be further communicated within the data system 10. The communication device 55 in this latter embodiment also contains a protocol for polling data terminal devices. Accordingly, the communication device 55 selectively polls or addresses the LAN controller 56. Upon receipt of a "handshake" signal indicating a message to be transmitted to the communication device 55, hence to be uploaded within the hierarchy of the data communication system 10, the LAN controller transmits to the communication device 55. Thus, in this latter embodiment, the LAN controller 56 functions as a communication device as described herein, except that both the active polling function and the passive function of being polled or addressed with a message transpires over the same, low power transceiver 25.

In accordance with a "soft" coupling of the data terminal devices of the data system 10 in general, a device which is not functional within the LAN is also not logged on, so that the absence of any one of the data terminal devices from the LAN does not generally affect the operation of the remaining data terminal devices within the LAN. Consequently, it is possible to remove the communication device 55 temporarily from the LAN identified in FIG. 2 by the numeral 62, without affecting the operation of the LAN 62. In the latter alternate embodiment the communication device 55 is further capable of selectively addressing and polling a plurality of LAN controllers 56. This latter operation permits several identical combinations of data terminals to be controlled selectively by the communication device 55 via separate LAN controllers 56.

A temporary removal or deactivation of the communication device 55 also temporarily interrupts communication with the host computer 11 via the communications interface 15. Such interruption may be a desired condition for certain system configurations in which the number of the communication devices 55 which may be addressed is limited. A single communication device 55 may then selectively be switched between LANs to upload data to the host computer 11 from more than one LAN without interruption of the continuous operation of the LANs.

A particular mode of operation of a first or low level communication may be explained in reference to FIG. 1. The mode is one in which the communication device 18 controls the LAN and relays data messages to the data terminal devices 33 though 39. In operation, the communication device 18 communicates with the data terminals 33 through 39 by, for example, sequentially polling each available address that may be populated by one of the data terminals to establish whether data are ready to be submitted by a respective one of the terminals polled. If the respective data terminal polled has a data message available, the data are transmitted from the respective data terminal and received by the communication device 18. Similarly, when data are to be transmitted from the communication device 18 to one of the data terminals 33 through 39, a presence "handshake" signal may first be received from a specifically addressed one of the data terminals. The data message is then transmitted by the communication device 18. While the transmitted data message may be received by the respective transceivers 25 of any and all of the data terminals present, the message is typically addressed in a manner to be uniquely identified only by one of the data terminals. The protocol may permit also simultaneous transmissions to more than one of the data terminals. For example, it may be desired to send a data message simultaneously to the printer 38 and to the display 37. The protocol may be configured to recognize a certain data message from the keyboard 35 to address a re-transmitted data message to be received and applied simultaneously by the printer 38 and the display 37 as a simultaneous data message communication. It may also be desired to "broadcast" to all of the data terminal devices within the LAN. An example of such a broadcast message than may be desirable under certain circumstances would be a general "reset" command communicated simultaneously to all devices within the LAN.

The keyboard 35 transmits through its transceiver 25 the data message to the communication device 18. At the communication device 18, the protocol identifies the received data message as having originated at the keyboard 35. Thus, the data message may be stored in the memory module 30 and may also be re-transmitted to the display 37. In effect, the keyboard has communicated data to the display 37. Additionally, the data have also been stored in the communication device 18 for further processing or transmission. The described operation pertaining to communication between the data communication device 18 and the data terminals 33 through 39 is referred to as first level communication. The described first level communication is the low power, short range communication.

The flow diagram of FIG. 6 illustrates as an example a polling type mode of communicating with both high and low power data message transmissions and receptions. For an understanding of the following description of major communication steps, reference may be made FIG. 1. The described mode of operation of the communication device 18 does, however, also apply to the communication device 55. In accordance with the hierarchical data communication set forth herein, the polling referred to herein transpires preferably in a "downward" directed mode. As an example, in a multi level communication system, the highest level may be a "third" level. Thus, the third level communication device may poll on a third level a plurality of second level communication devices. In turn, the second level communication devices, which may be the communications interface 15, would poll on a respectively second level a plurality of first level communication devices, such as the communication device 18. The communication device 18, in turn, polls on a first or lowest level of communication the data terminals 33 through. 39. It should be understood that a protocol according to which a plurality of data terminals are polled is but one of a number of acceptable protocols according to which data may be selectively communicated among such data terminals. Other protocols are also well known and have been used in addressing selected ones of a plurality of data terminals. Among protocol types which are known in the art and which may be employed for LAN communication are, for example, contention type protocols. For example, a "carrier sense multiple access" ("CSMA") protocol is a contention protocol which may be used in a LAN. It may be desirable to substitute a contention type protocol for data terminal device polling in certain implementations of the invention.

The flow diagram in FIG. 6 illustrates for example a pattern of communication on a first or lowest level, such as between the communication device 18 and the data terminal devices 33 through 39, and communication to its next higher level. Beginning at the top of the flow chart, one of the low level devices is polled. When data are ready to be transmitted by one of the data terminal devices, for example the card reader 33, "data ready" is answered in the affirmative and the communication device 18 receives data from the reader in form of a first level radio frequency transmission. The received data message typically including at least one address code and data codes is stored in the memory module 30 (see FIG. 3).

A following step is identified as a protocol check. The communication device 18 needs to determine what to do with the received data message or information. The step "interpret address and protocol" refers to obtaining routing information from an address code portion in a check against program instructions referred to as "protocol". For example, if the received data message is an input from the card reader 33, the information may need to be transmitted to the host computer 11 for verification. The following test steps show results dictated by the programmed protocol in light of the "address" information of the data message.

In that the "address" code may denote not only origin but also destination information, the "address" may be considered indicative of routing information. Routing instructions are implemented in reference to the programmed protocol. With respect to the example, the "transmit" and "upload" queries are answered in the affirmative, the data message is read from memory and transmitted on the next higher level, as indicated by the steps "read address & data" and "transmit H-level data".

The flow chart depicted in FIG. 6 should be understood to be a simplification for illustrative purposes of a representative operational sequence of the communication device 18. A typical simplification becomes apparent with respect to another example. A data message is received as described from the keyboard 35. The protocol may, for example, provide for the received data to be transmitted on the first or lowest level to the display 37. Also, the "data" may have represented a query from the keyboard to the host computer requesting a current price on an item number transmitted in the data portion of the data message. A query code in the address determines that the data need to be communicated to the host computer 11. Thus, the "upload?" question is then answered in both the negative and the affirmative, such that the data message may be transmitted under "transmit L-level data" to the display and also via the "transmit H-level data" via the communications interface 15 to the host computer.

An alternative procedure may assign first level or first order communication priorities. Accordingly, in the last example, the receipt by the communication device 18 from the keyboard 35 is addressed and transmitted without delay to the display 37 to allow the request to be visually verified before an address instruction is executed to transmit as an "upload" via the communications interface 15 to the host computer 11. In general, a protocol giving first level communication priority is preferred. The data terminal devices 33 through 39 are typically expected to interact as a local system through the "virtual LAN". Thus, delays in transmitting data from the keyboard 35 to the display 37 within the same level may be undesirable. A delay of reasonable length in receiving a reply from the host computer 11 may typically be expected. Typically the communications interface 15, as shown in FIG. 8, would serve a substantial number of similar communication devices 18, generating opportunities for short transmission delays to some of the communication devices 18.

In reference to the polling operation shown in the flow diagram of FIG. 6, after having polled one of the data terminal devices with the result of no data ready, the protocol may cause the communication device to check whether the communications interface 15 is ready to download a data message to the respective communication device 18. If the query is negative, the polling of the data terminal devices continues. If the check of second level data waiting ("H-LEV. INTERRUPT?") is answered in the affirmative, the communication device 18 receives the data message, stores its address and data portions and continues to process the received data message in a manner described with respect to the receipt of a low level or first level data message.

FIG. 8 illustrates further the hierarchy of the high power, low power communication and the resulting multiple of operations possible within the data system 10. In the schematic representation of the data system 10 in FIG. 8, the high power transceiver 17 of the communications interface 15 is operated in a multiplex mode in which the communications interface 15 is capable of addressing a predetermined number, for example sixteen, of the communication devices 18. The devices 18 are generally located remote from each other. Each of the devices 18 is typically an active receiving unit within a separate LAN. Thus, each of the LANs would contain one or more low power transceiver 25, each low power transceiver 25 representing a terminal of a communication link to a respective data terminal device ("ALT"), which may be any of the terminal devices described or referred to herein.

The communications interface 15 controls data communication between any of a plurality of LANs and the respective host computer 11. A communication link 65 between the communications interface 15 and the host computer may be a data conductor such as the data conductor 12 referred to with respect to FIG. 1, or the link 65 may be one of a number of links of yet a third level of multiplexing to the host computer 11. In either case, the communications interface 15 relays data messages based on instructions from the host computer 11 to the communication devices 18 and their respective LANs.

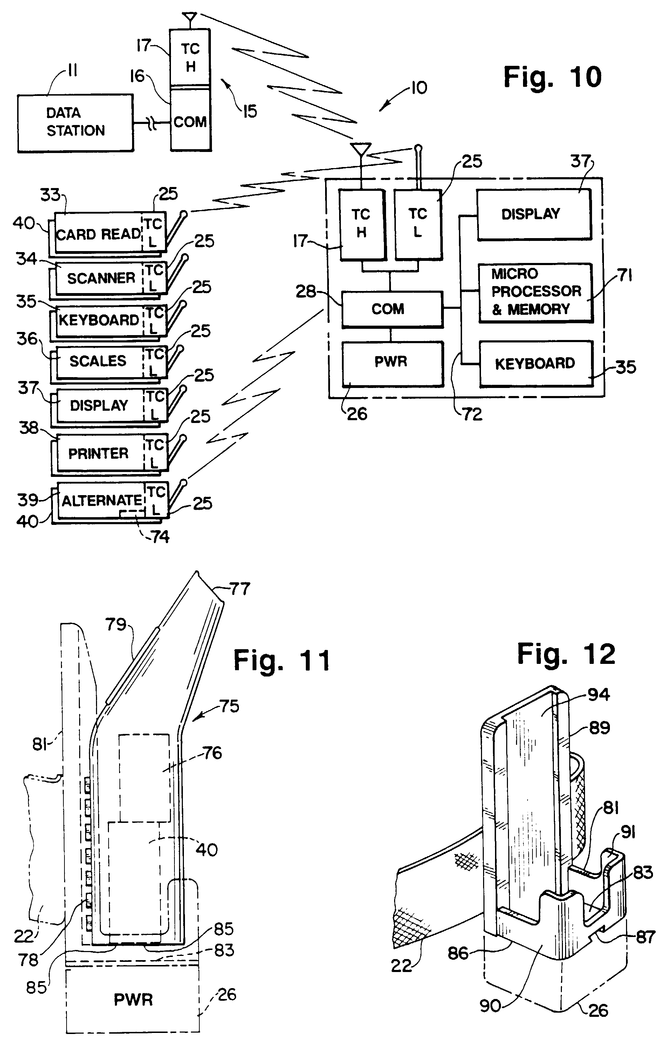

FIG. 10 illustrates a further data system configuration. In particular, FIG. 10 illustrates schematically the substitution of a data terminal and communication device 70 for the communication devices 18 or 55 illustrated in FIGS. 1 and 8 or FIG. 2, respectively. The data terminal and communication device 70 combines with the features and functions of the previously described communication device 18 a display device 37, such an LCD display device, and a keyboard 35 which may be an alpha-numeric keyboard and may include in addition keys which double as function keys in accordance with current practice for data terminals.

The diagrammatic block representation of a "MICRO PROCESSOR & MEMORY" circuit 71 would typically include the microprocessor 29, the RAM memory 30, the ROM memory 31 and interconnecting portions of the data bus 31 as hereinbefore described. The microprocessor 29 may be modified as already described to include at least one additional processor circuit, while the memory 30 may be expanded to support within the device 70 data storage and processing functions of a computer. The "PWR" battery pack 26 is desirably coupled to power all functions of the device 70 via data and power bus 72.

The device 70 may be portable in the sense of being carried about by a person while such person may actually be operating the device 70. Such operation may be active communication with one or more of the data terminal devices 33 through 39 via the low power transceiver 25. Alternatively, the person may be communicating via the high power transceivers 17 with, for example, the host computer 11, or in the absence of communication with the latter, by working the keyboard to process data locally. The device may also be considered portable in the sense of being mounted or installed in a vehicle (not shown), such as a delivery route truck. Also, in warehouse type operations, the device 70 may be installed on a forklift vehicle to communicate with one or more data terminal devices 33 through 39.

The device 70, consequently, enhances the operation of the communication device 18. As the communication device 18, the device 70 supports the described LAN type operations as first, low power level communications, or by relaying data messages by converting low power radio frequency communications to high power radio frequency communications or vice versa. In addition, the device 70 functions as a local data processing station. The data processing enhancement may be of particular importance when mobile operation from a vehicle is desired and the device 70 is temporarily out of communication range even on the high power communication channel of the transceiver 17.

The device 70 has the further advantage of allowing resident data to be manually changed in accordance with changed conditions which may be encountered on a real time basis. For example in inventory control operations, the device 70 may contain all initial data relating to merchandise items in a warehouse. As a LAN controller, the data terminal may communicate on a low level with a plurality of the data terminal devices 39 relaying data to the device 70, while the person operating the device 70 may supervise an inventory taking operation. Simultaneously with being able to send instructions to operators of the data terminal devices 39, the operator of the device 70 may access the data base within the device 70, compare received data and make decisions regarding variations or discrepancies deduced from the received data. Similarly, on a delivery route, the driver of a delivery vehicle may be able to change an order and provide the recipient of such order with an updated invoice. The updated information would be stored in the memory of the circuit 71 for subsequent transfer to the host computer 11 or other data storage or processing means as may be desired. Various other applications similar to those examples already described may be realized when with the enhancements of the data terminal and communication device 70.

A further enhancement of the data system 10 which particularly relates to the usefulness of the low power data terminal device 39 is found in an alternate embodiment of the device 39. On a selective basis, the device 39 may be provided with a further communication device 74, in addition or as part of the transceiver 25, such as is indicated for example in FIG. 10. The device permits a data entry and scanner device 75 which may functionally be part of the data terminal device 39 to become independently mobile with respect thereto. Referring to FIG. 11, there is shown a simplified representation of a data entry and scanner device 75. The data entry and scanner device 75 includes some features similar to those of the data entry module 47. However, in distinction over the data entry module 47 shown in FIG. 5, the data entry and scanner device 75 includes a data input and communication circuit module 76 which is communicatively coupled to the communication device 74 of a selected one of the data terminal device 39 to support wireless communication therewith. Various short range wireless communication means are known and commercially available which may be utilized to communicate data over a very short range, such as up to ten feet. Data communication may be by low power radio frequency over a special channel to the data terminal device 39 which is specially encoded for reception of data from the circuit module 76. Other modes for communicating data to the data terminal device 39 may, for example, include an ultrasonic signal carrier wave. It is understood that the designated data terminal would be equipped with a compatible carrier wave transducer or receiver 74 to receive the data communication from the data entry and scanner device 75. Other sources for short range communication may become available.

The data entry and scanner device 75 further includes a scanner head 77. The scanner head 77 shown in FIG. 11 is deemed representative of any of a number of known types of scanners, such as wand types, laser types or flash types which may be used in accordance herewith. Preferably, the device 75 may include a keyboard 78, and a display 79. The keyboard 78 may be an alphanumeric keyboard and may be identical to the previously referred to keyboard 35. The display 79 desirably is an LCD display because of the low power requirements for that type of display. The display 79 typically might be functional to display numerals or characters in humanreadable format of codes read by the scanner head. An operator may then verify the data prior to transmitting them to the respective data terminal device 39.

In case of an error in the data read by the scanner head 77, or in case of an inability of the scanner head 77 to recognize the codes representing the data to be read, an operator of the device 75 may correct, override or enter data into the device and verify their correctness from the display 79. Because the device 75 is a self contained unit, the keyboard 78, display 79 and the data entry and communication module 76 are operated by an on-board power source, such as a battery 40, which preferably may be rechargeable. The device is movable and usable within its functional communication range independently of the respective device 39. The use may be restricted to arm movement of an operator when the operator carries the device 39 on a belt, similar to the device 39 shown in FIG. 5, or the independent range of movement with respect to the corresponding device 39 may extend to a reasonable range of several feet, such as when the scanner is used away from a forklift truck and the device 39 is mounted on such truck.

Between uses the device 75 may be returned to a receptacle or holster 81 shown in FIG. 11 in phantom lines. The holster 81 may be mounted in a vehicle or may be carried on a person's belt 22. As a particular feature, the holster 81 is preferably provided with a battery pack of generally considerable power carrying capacity, such as a rechargeable battery 26, also labeled "PWR". Terminals of the battery 26 may be coupled electrically through a base 83 to make contact through the holster 81 with external contacts 85 of the device 75. The contacts 85 are in turn coupled electrically to the rechargeable battery 40 of the device 75. Thus, during periods of non-use, the power source or battery 40 of the device 75 may be recharged. Such a provision for recharging the battery 40 permits the size of the battery 40, its weight and the size and total weight of the device 75 to remain comparatively small while extending the time of use of the device 75.

FIG. 12 shows somewhat simplified an pictorial illustration of a receptacle or holster 81 for the data entry and scanner device 75. The base 83 of the holster 81 is shown to contain on its underside 86 a retainer slot 87 as a representative means for releasably receiving the battery pack 26. A quick exchange of the battery pack 26 for a fully charged battery pack 26 further extends the usefulness of the device 75. An upright guide wall 89 cooperates with front guides 90 and 91 to form a seat or socket of the holster 81 for retaining the device 75 during non-use. If the holster 81 is to be worn on a person's belt 22, the belt may be attached to an outer surface of the upright guide wall 89. A recess or depression 94 which may extend the entire length of an inner surface of the upright guide wall 89 would provide protection to the keys of the keyboard 78 and prevent accidental data entry or transmission when the device 75 is inserted into the holster. The described holster is merely given as an example of a receptacle for the described data entry and scanner device 75, to illustrate a convenient means for retaining the device 75 and for recharging the battery 40 during periods of non-use of the device.

## Claims

1. A data communication system (10) comprising a local area network (62) adapted to operate on a first wireless communication channel; a communications interface (15) adapted to operate on a second wireless communication channel; and a mobile communication device (55) adapted to operate on the first and second wireless communication channels, wherein a controller (56) is provided to operate on the first wireless communication channel to manage communication on the local area network (62).

2. A system according to Claim 1 wherein the communications interface (15) is communicatively linked to a data station (11).

3. A system according to Claim 1 or Claim 2 wherein the controller (56) is adapted to manage the communication on the local area network (62) using a polling protocol.

4. A system according to any preceding Claim wherein the communications interface (15) comprises a spread spectrum transceiver (17).

5. A system according to any preceding Claim wherein the controller (56) is adapted to manage communication on the local area network (62) whilst temporarily communicatively decoupled from the communication device (55).

6. A system according to any preceding Claim wherein the local area network (62) comprises a plurality of data terminals (57-61), each having a transceiver for operating on the first wireless communication channel.

7. A system according to Claim 6 wherein the data terminal devices (57-61) each comprise a removable cartridge (45) for configuring the respective device for operation on the first wireless communication channel.

8. A system according to any preceding Claim wherein the communication device (55) comprises a microprocessor (29) for storing and retrieving data and for processing data received.

9. A system according to any preceding Claim wherein the communication device (55) comprises first and second wireless transceivers (25, 17) for operating on the first and second wireless communication channels, respectively, each transceiver being controlled by a respective microprocessor (29).

10. A system according to any preceding Claim wherein the communication device (55) comprises a memory device (30) for temporary storage of data, and is adapted to retrieve said data for batch relaying.

11. A system according to any preceding Claim wherein the communication device (55) is adapted to communicate selectively with a plurality of controllers (56), each in a respective local area network (62).

12. A system according to any preceding Claim wherein the communication device (55) comprises a display (37) and keyboard (35) to provide a local data processing function.

## Patentansprüche

1. Datenübertragungssystem (10) mit einem lokalen Netzwerk (62), das so ausgebildet ist, daß es auf einem ersten drahtlosen Übertragungskanal arbeitet; einer Übertragungsschnittstelle (15), die so ausgebildet ist, daß sie auf einem zweiten drahtlosen Übertragungskanal arbeitet; und einem mobilen Übertragungsgerät (55), das so ausgebildet ist, daß es auf dem ersten und dem zweiten drahtlosen Übertragungskanal arbeitet, **dadurch gekennzeichnet, daß** ein Steuergerät (56) vorgesehen ist, das auf dem ersten drahtlosen Übertragungskanal arbeitet, um die Übertragung in dem lokalen Netzwerk (62) zu verwalten.

2. System nach Anspruch 1, dadurch gekennzeichnet, daß die Übertragungsschnittstelle (15) mit einer Datenstation (11) kommunikativ verbunden ist.

3. System nach Anspruch 1 oder Anspruch 2, dadurch gekennzeichnet, daß das Steuergerät (56) so ausgebildet ist, daß es die Übertragung in dem lokalen Netzwerk (62) unter Verwendung eines Polling-Protokolls verwaltet.

4. System nach einem der vorhergehenden Ansprüche, dadurch gekennzeichnet, daß die Übertragungsschnittstelle (15) einen Streu-Sprektrum-Transceiver (17) aufweist.

5. System nach einem der vorhergehenden Ansprüche, dadurch gekennzeichnet, daß das Steuergerät (56) so ausgebildet ist, daß es die Übertragung in dem lokalen Netzwerk (62) verwaltet, während es vorübergehend von dem Übertragungsgerät (55) kommunikativ entkoppelt ist.

6. System nach einem der vorhergehenden Ansprüche, dadurch gekennzeichnet, daß das lokale Netzwerk (62) mehrere Datenendgeräte (57-61) umfaßt, die jeweils einen Transceiver zum Arbeiten auf dem ersten drahtlosen Übertragungskanal aufweisen.

7. System nach Anspruch 6, dadurch gekennzeichnet, daß jedes der Datenendgeräte (57-61) eine entfernbare Kassette (45) zum Konfigurieren des jeweiligen Gerätes zum Arbeiten auf dem ersten drahtlosen Übertragungskanal aufweist.

8. System nach einem der vorhergehenden Ansprüche, dadurch gekennzeichnet, daß das Übertragungsgerät (55) einen Mikroprozessor (29) zum Speichern und Wiederauffinden von Daten und zum Verarbeiten von empfangenen Daten aufweist.

9. System nach einem der vorhergehenden Ansprüche, dadurch gekennzeichnet, daß das Übertragungsgerät (55) einen ersten und einen zweiten drahtlosen Transceiver (25, 17) zum Arbeiten auf jeweils dem ersten und dem zweiten drahtlosen Übertragungskanal aufweist, und daß jeder Transceiver durch einen entsprechenden Mikroprozessor (29) gesteuert wird.

10. System nach einem der vorhergehenden Ansprüche, dadurch gekennzeichnet, daß das Übertragungsgerät (55) ein Speichergerät (30) zum vorübergehenden Speichern von Daten aufweist und so ausgebildet ist, daß es diese Daten für eine Stapel-Weiterleitung wiederauffindet.

11. System nach einem der vorhergehenden Ansprüche, dadurch gekennzeichnet, daß das Übertragungsgerät (55) so ausgebildet ist, daß es wahlweise mit mehreren Steuergeräten (56) kommuniziert, die sich jeweils in einem entsprechenden lokalen Netzwerk (62) befinden.

12. System nach einem der vorhergehenden Ansprüche, dadurch gekennzeichnet, daß das Übertragungsgerät (55) eine Anzeige (37) und eine Tastatur (35) aufweist, um eine lokale Datenverarbeitung zu ermöglichen.

## Revendications

1. Système de transmission de données (10) comprenant un réseau local urbain (62) destiné à fonctionner sur un premier canal de radiocommunication ; une interface de télécommunication (15) destinée à fonctionner sur un second canal de radiocommunication ; et un dispositif de télécommunication mobile (55) destiné à fonctionner sur les premier et second canaux de radiocommunication, dans lequel un dispositif de commande (56) est destiné à fonctionner sur le premier canal de radiocommunication pour gérer les télécommunications sur le réseau local urbain (62).

2. Système selon la revendication 1, dans lequel l'interface de télécommunication est raccordée de manière communicative à une station de données (11).

3. Système selon la revendication 1 ou 2, dans lequel le dispositif de commande (56) est destiné à gérer les télécommunications sur le réseau local urbain (62) en utilisant un protocole d'interrogation.

4. Système selon l'une des revendications précédentes, dans lequel l'interface de télécommunication (15) comprend un émetteur-récepteur à spectre dispersé (17).

5. Système selon l'une des revendications précédentes, dans lequel le dispositif de commande (56) est destiné à gérer les télécommunications sur un réseau urbain local (62) tout en étant temporairement découplé de manière communicative du dispositif de télécommunication (55).

6. Système selon l'une des revendications précédentes, dans lequel le réseau urbain local (62) comprend plusieurs terminaux de données (57-61) présentant chacun un émetteur-récepteur destiné à fonctionner sur le premier canal de radiocommunication.

7. Système selon la revendication 6, dans lequel les dispositifs de terminal de données (57-61) comprennent chacun une cartouche amovible (45) destinée à configurer le dispositif respectif pour fonctionner sur le premier canal de radiocommunication.

8. Système selon l'une des revendications précédentes, dans lequel le dispositif de télécommunication (55) comprend un microprocesseur (29) destiné à stocker et à récupérer des données et à traiter les données reçues.

9. Système selon l'une des revendications précédentes, dans lequel le dispositif de télécommunication (55) comprend des premier et second émetteurs-récepteurs sans fil (25, 17) destinés à fonctionner sur les premier et second canaux de radiocommunication respectivement, chaque émetteur-récepteur étant commandé par un microprocesseur (29) respectif.

10. Système selon l'une des revendications précédentes, dans lequel le dispositif de télécommunication (55) comprend un dispositif de mémoire (30) destiné à stocker temporairement les données et est destiné à récupérer lesdites données pour les relayer par lots.

11. Système selon l'une des revendications précédentes, dans lequel le dispositif de télécommunication (55) est destiné à communiquer de manière sélective avec plusieurs dispositifs de commande (56) chacun dans un réseau urbain local (62) respectif.

12. Système selon l'une des revendications précédentes, dans lequel le dispositif de télécommunication (55) comprend un écran (37) et un clavier (36) destinés à remplir une fonction de traitement des données local.
